**Europäisches Patentamt**

**European Patent Office**

**Office européen des brevets**

(19)

(11) Veröffentlichungsnummer: **0 215 511**
**B1**

# EUROPÄISCHE PATENTSCHRIFT

(12)

(45) Veröffentlichungstag der Patentschrift:
26.07.89

(51) Int. Cl.⁴: **F16J 10/04**, F02F 1/20

(21) Anmeldenummer: **86201457.8**

(22) Anmeldetag: **22.08.86**

(54) Kolben-Zylinder-Bausatz für Brennkraftmaschinen.

(30) Priorität: **11.09.85 DE 3532308**

(43) Veröffentlichungstag der Anmeldung:
**25.03.87 Patentblatt 87/13**

(45) Bekanntmachung des Hinweises auf die Patenterteilung:
**26.07.89 Patentblatt 89/30**

(84) Benannte Vertragsstaaten:
**DE FR GB IT**

(56) Entgegenhaltungen:
**DE-A- 2 446 870**
**DE-B- 1 040 841**
**GB-A- 964 618**
**US-A- 4 393 821**

**KS-Kolloquium, 14.-17.5.1979, Neckarsulm, Ing.(grad.)E.**
**Strasser: "Kolbengestaltung für niedrigen**
**Ölverbrauch", S. 1-11**

(73) Patentinhaber: **KOLBENSCHMIDT Aktiengesellschaft,**
**Christian-Schmidt-Strasse 8/12 Postfach 1351,**
**D-7107 Neckarsulm(DE)**

(72) Erfinder: **Strasser, Erwin, Pfühlstrasse 15,**
**D-7100 Heilbronn(DE)**

(74) Vertreter: **Rieger, Harald, Dr. et al, Reuterweg 14,**
**D-6000 Frankfurt am Main(DE)**

**Beschreibung**

Die Erfindung betrifft einen Kolben-Zylinder-Bausatz für Brennkraftmaschinen, insbesondere für Dieselmotoren, mit einem Feuerstegspiel von 0,3 bis 1,5 %, vorzugsweise 0,4 bis 1,0 % des Kolbendurchmessers und einer am brennraumseitigen Randbereich der Zylinderlauffläche angebrachten umlaufenden Profilierung.

Die Wirtschaftlichkeit einer Brennkraftmaschine ist nicht nur durch einen niedrigen Kraftstoffverbrauch, sondern auch durch einen möglichst niedrigen Ölverbrauch bestimmt, obwohl letzterer nur einen Bruchteil eines Prozentes des Kraftstoffverbrauchs beträgt. Erhöhter Ölverbrauch ist nicht nur unwirtschaftlich, sondern führt zudem zu unerwünschten Verkokungserscheinungen im Bereich des Brennraums, des Kolbens und der Ventile, die erhebliche Folgeschäden verursachen können. Größerer Ölverbrauch verschlechtert zusätzlich die Emissionen und führt damit zu einer erhöhten Umweltbelastung. Andererseits ist jedoch bei zu starker Senkung des Ölverbrauchs die Funktion der Brennkraftmaschine infolge zu hohen Verschleisses oder durch Fressen gefährdet. Um die Ölverbrauchsgrenzwerte von $\leq$ 0,5 g/kWh bei Brennkraftmaschinen, insbesondere bei Nkw-Dieselmotoren, einhalten zu können, wird heute ein beachtlicher Wert auf die Gestaltung und Abstimmung des Kolbens ebenso wie auf die Optimierung der Kolbenringbestückung und Zylinderlauffläche gelegt. Ein besonderes Problem stellt dabei das sogenannte Zylinderpolieren dar, das zu einem Anstieg des Ölverbrauchs über der Laufzeit des Kolbens und darüber hinaus zur Gefahr von Langzeitkolben-Fressern führt. Das Zylinderpolieren wird durch sich im Motorbetrieb am Feuersteg des Kolbens absetzende harte Ölkohle verursacht, durch die infolge der Längs- und Querbewegung des Kolbens das auf der Zylinderlauffläche befindliche Honprofil eingeebnet wird. Das Schmieröl hat dann keine Möglichkeit mehr, sich in den 2 bis 10 μm tiefen Riefen des Honprofils anzusammeln, sondern wird statt dessen von der Zylinderlauffläche in Richtung zum Brennraum geschoben und dort verbrannt. Das führt zu Ölmangelzuständen, die den Verschleiß und die Riefenbildung an den Kolbenringen fördern. Außerdem bilden sich im Bereich der polierten Zylinderlauffläche kleine Spalte, denen die Formfüllung der Kolbenringe nicht vollständig folgen kann, so daß deren Abstreifwirkung deutlich abnimmt und infolgedessen der Ölverbrauch ansteigt.

Um möglichst günstige Kraftstoffverbräuche und Emissionen zu erhalten, sind die Feuerstegspiele der Kolben von europäischen Dieselmotoren mit ca. 0,5 bis 0,8% des Kolbendurchmessers ausgeführt (Strasser, E.: Kolbengestaltung für niedrigen Ölverbrauch, KS-Kolloquium, Mai 1979). Dabei muß allerdings eine sehr sorgfältige und aufwendige Feuerstegspiele-Abstimmung durchgeführt werden.

Es ist zwar bekannt (SAE-Paper No. 845 010), daß durch ein relativ großes Feuerstegspiel von 1,5 bis 2,0 % des Kolbendurchmessers die Polierung der Zylinderlauffläche reduziert bzw. ganz vermieden werden kann. Dieser Vorteil muß allerdings mit einer erhöhten Kolbentemperatur, z.B. beim Dieselkolben von 30 bis 50 °C am Rand der Brennraummulde und von 20 bis 30 °C am ersten Kolbenring bzw. an der ersten Kolbenringnut, einer Zunahme des Kraftstoffverbrauchs in der Größenordnung von 2% sowie mit verschlechterten Emissionen erkauft werden. Es ist zwar möglich, die höhere Kolbentemperatur durch wirksame Kolbenkühlung, den höheren Kraftstoffverbrauch und die verschlechterten Emissionen durch eine Reduzierung der Feuerstegshöhe auf 8 bis 10% des Kolbendurchmessers im Vergleich zur üblichen Höhe von 15 bis 18% einigermaßen auszugleichen; dennoch entspricht dieses Ergebnis nicht den vom Motorenanwender an zeitgemäße Brennkraftmaschinen gestellten Anforderungen.

Es sind deshalb Nutzfahrzeug-Dieselmotoren im Einsatz, bei denen bei einem Feuerstegspiel von 0,8 bis 1,5% des Kolbendurchmessers am brennraumseitigen Randbereich der Zylinder durch umformende Bearbeitung eine Profilierung angebracht ist, durch die der Aufbau einer harten Ölkohleschicht am Feuersteg ganz verhindert oder doch in so engen Grenzen gehalten wird, daß der Ölverbrauch und damit auch die Emissionen über der Laufzeit der Brennkraftmaschine nicht unzulässig ansteigen. Durch diese Maßnahme wird die am Feuersteg angesetzte harte Ölkohle beim Anlagewechsel des Kolbens im oberen Zylinderbereich durch die Berührung mit der umlaufenden Profilierung ständig abgetragen, so daß die Zylinderpolierung auf ein zulässiges Maß beschränkt bleibt. Da bei einem derartig gestalteten Zylinder die Spitzen der Profilierung als Folge der umformenden Herstellung etwa 0,2 mm über der Ebene der Zylinderlauffläche vorstehen, muß der Kolben von unten her in den noch nicht in den Motor eingebauten Zylinder eingesetzt werden, erst danach folgt die Montage des Zylinders. Ein weiterer Nachteil ist darin zu sehen, daß die Genauigkeit der Profilierung nur in relativ weiten Grenzen reproduzierbar ist.

Es ist die Aufgabe der vorliegenden Erfindung, einen Kolben-Zylinder-Bausatz der eingangs beschriebenen Ausbildung so zu gestalten, daß der Kolben in üblicher Weise in den Zylinder eingeschoben werden kann, ohne daß die guten Eigenschaften hinsichtlich niedrigstem Öl- und Kraftstoffverbrauch sowie geringen Emissionen beeinträchtigt werden.

Die Lösung dieser Aufgabe geschieht dadurch, daß die Profilierung im Bereich gegenüber dem Feuersteg in der oberen Totpunktlage des Kolbens angeordnet ist und die Spitzen der durch spanende Bearbeitung gefertigten Profilierung in der Ebene der Zylinderlauffläche liegen. Durch diese Maßnahme ist es möglich, den Kolben nach dem Einbau des Zylinders in den Motor in die Zylinderbohrung einzuschieben.

Nach einem besonderen Merkmal der Erfindung besitzt die Profilierung der Zylinderlauffläche halbkreisförmige, bogenförmige, trapezförmige, spitzwinkelförmige, sägezahnförmig-winkelsymmetrische, sägezahnförmig-stumpfwinklige oder eine ähnliche Gestalt, wobei die Profilierung gewindeartig verlaufend angeordnet sein kann.

Gemäß einem vorzugsweisen Merkmal der Erfindung betragen die Tiefe der Profilwellen max. 50%, vorzugsweise 0,5 bis 10% der Wanddicke des Zylinders und der Abstand der Profilwellen max. 50%, vorzugsweise 3 bis 6% der Höhe des Feuerstegs.

Die Höhe der Profilierung der Zylinderlauffläche entspricht zweckmäßig ganz oder teilweise der Höhe des Feuerstegs.

Die Erfindung ist in der Zeichnung dargestellt und wird nachfolgend näher und beispielsweise erläutert.

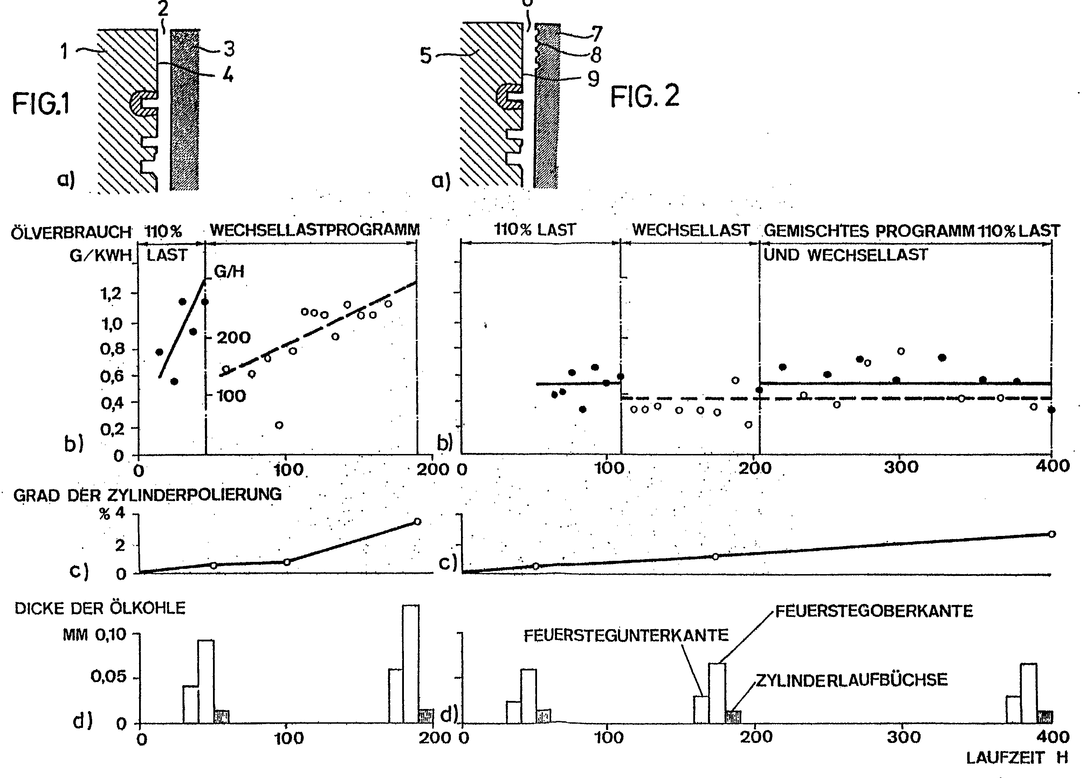

Gemäß Fig. 1a) wurde in einem ersten Versuch bei einem Dieselmotor mit Aufladung ein Dieselkolben (1) mit einem kleinen Feuerstegspiel (2) von 0,6% des Kolbendurchmessers in den normalbearbeiteten Zylinder (3) von 120 mm Durchmesser eingeschoben. Die Auswertung der Versuche zeigt gemäß Fig. 1b), daß sowohl bei konstanter Last von 110% als auch bei Wechsellast der Ölverbrauch steigende Tendenz besitzt. Die relativ dicke sich am Feuersteg (4) an dessen Ober- und Unterkante aufbauende Ölkohleschicht führt gemäß Fig. 1b) insbesondere bei Wechsellast zu einer unzulässigen Zylinderpolierung gemäß Fig. 1c), so daß die Messung nach einer Dauer von 200 h beendet wurde.

In einem zweiten Versuch wurde nach Fig. 2a) ein Dieselkolben (5) mit einem Feuerstegspiel (6) von 0,6% des Kolbendurchmessers in einen Zylinder (7) mit 120 mm Durchmesser eines Dieselmotors mit Aufladung eingesetzt, dessen Lauffläche im brennraumseitigen Bereich mit einem durch spanende Fertigung hergestellten winkelsymmetrischen Profil (8) versehen ist.

Aus Fig. 2d) geht hervor, daß sich die Profilierung (8) der Zylinderlauffläche in einer beachtlichen Verringerung der Dicke der Ölkohleschicht an Ober- und Unterkante des Feuerstegs (9) auswirkt und auch über die Laufzeit konstant bleibt. Demzufolge reduziert sich auch die Rate der Zylinderpolierung, wie Fig. 2c) zeigt, auf ein zulässiges Maß. Der Ölverbrauch bleibt gemäß Fig. 2b) sowohl bei konstanter Last von 110%, wie bei Wechsellast als auch bei einer Mischung aus konstanter Last und Wechsellast über die gesamte Versuchsdauer auf vergleichsweise niedrigem Niveau von ca. 0,6 g/kWh bei 110% Last und bei Wechsellast von 140 g/h konstant. Da sich keine wesentlichen Änderungen während der Laufzeit zeigten, wurde der Versuch nach 400 h abgebrochen.

## Patentansprüche

1. Kolben-Zylinder-Bausatz für Brennkraftmaschinen, insbesondere für Dieselmotoren, mit einem Feuerstegspiel (6) von 0,3 bis 1,5%, vorzugsweise 0,4 bis 1,0% des Kolbendurchmessers und einer am brennraumseitigen Randbereich der Zylinderlauffläche angebrachten umlaufenden Profilierung (8), dadurch gekennzeichnet, daß die Profilierung (8) im Bereich gegenüber dem Feuersteg (9) in der oberen Totpunktlage des Kolbens (1) angeordnet ist und die Spitzen der Profilierung in der Ebene der Zylinderlauffläche liegen.

2. Kolben-Zylinder-Bausatz nach Anspruch 1, dadurch gekennzeichnet, daß die Profilierung (8) der Zylinderlauffläche halbkreisförmige, bogenförmige, trapezförmige, spitzwinkelförmige, sägezahnförmig-winkelsymmetrische, sägezahnförmig-stumpfwinklige oder eine ähnliche Gestalt besitzt.

3. Kolben-Zylinder-Bausatz nach den Ansprüchen 1 und 2, dadurch gekennzeichnet, daß die Tiefe der Profilwellen maximal 50%, vorzugsweise 0,5 bis 10% der Wanddicke des Zylinders (7) beträgt.

4. Kolben-Zylinder-Bausatz nach den Ansprüchen 1 bis 3, dadurch gekennzeichnet, daß der Abstand der Profilwellen maximal 50%, vorzugsweise 3 bis 6% der Höhe des Feuerstegs (9) beträgt.

5. Kolben-Zylinder-Bausatz nach den Ansprüchen 1 bis 4, dadurch gekennzeichnet, daß die Profilierung (8) gewindeartig verlaufend angeordnet ist.

6. Kolben-Zylinder-Bausatz nach den Ansprüchen 1 bis 5, dadurch gekennzeichnet, daß die Höhe der Profilierung (8) ganz oder teilweise der Höhe des Feuerstegs (9) entspricht.

## Revendications

1. Ensemble piston-cylindre pour des moteurs à combustion interne, notamment pour des moteurs diesel, avec un jeu (6) du cordon de feu compris entre 0,3 et 1,5% et de préférence entre 0,4 et 1,0% du diamètre du piston et un profil circonférentiel (8) prévu dans la zone marginale, située du côté de la chambre de combustion, de la surface de glissement du cylindre, caractérisé par le fait que le profil (8) est disposé dans la zone située en vis-à-vis du cordon de feu (9), lorsque le piston (1) est dans la position de point mort haut, et que les pointes du profil sont situées au niveau de la surface de glissement du cylindre.

2. Ensemble piston-cylindre suivant la revendication 1, caractérisé par le fait que le profil (8) de la surface de glissement du cylindre possède une configuration de forme semicirculaire, en forme d'arc de cercle, de forme trapézoïdale, en forme d'angle aigu, en forme de dents de scie à symétrie angulaire, en forme de dents de scie à angles obtus ou bien une configuration semblable.

3. Ensemble piston-cylindre suivant les revendications 1 et 2, caractérisé par le fait que la profondeur des ondulations du profil est égale au maximum à 50% et est comprise de préférence entre 0,5 et 10% de l'épaisseur de la paroi du cylindre (7).

4. Ensemble piston-cylindre suivant les revendications 1 à 3, caractérisé par le fait que la distance des ondulations du profil est égale au maximum à 50% et est comprise de préférence entre 3 et 6% de la hauteur du cordon de feu (9).

5. Ensemble piston-cylindre suivant les revendications 1 à 4, caractérisé par le fait que le profil (8) est disposé à la manière d'un filetage.

6. Ensemble piston-cylindre suivant les revendications 1 à 5, caractérisé par le fait que la hauteur du profil (8) correspond, en totalité ou en partie, à la hauteur du cordon de feu (9).

## Claims

1. A piston-cylinder assembly for internal combustion engines, in particular for diesel engines, having a top land clearance (6) of 0.3 to 1.5%, preferably 0.4 to 1.0%, of the piston diameter and a peripheral profiled portion (8) made on the edge region on the combustion chamber side of the cylinder running surface, characterised in that the profiled portion (8) is disposed in the region opposite the top land (9) in the top dead centre position of the piston (1) and the crests of the profiled portion are in the plane of the cylinder running surface.

2. A piston-cylinder assembly according to Claim 1, characterised in that the profiled portion (8) of the cylinder running surface has a semicircular, arcuate, trapezoidal, acute-angled, isosceles angled-sawtooth shape, obtuse-angled sawtooth shape or similar shape.

3. A piston cylinder assembly according to Claims 1 and 2, characterised in that the depth of the profiled portion waves is up to 50%, preferably 0.5 to 10%, of the thickness of the wall of the cylinder (7).

4. A piston-cylinder assembly according to Claims 1 to 3, characterised in that the distance between the profiled portion flutes is a maximum of 50%, preferably 3 to 6%, of the height of the top land (9).

5. A piston-cylinder assembly according to Claims 1 to 4, characterised in that the profiled portion (8) is arranged so as to run in a helix.

6. A piston-cylinder assembly according to Claims 1 to 5, characterised in that the height of the profiled portion (8) fully or partly corresponds to the height of the top land (9).

FIG.1

a)

1
2
3
4

FIG.2

a)

5
6
7
8
9

ÖLVERBRAUCH 110% LAST WECHSELLASTPROGRAMM

G/KWH

1,2
1,0
0,8
0,6
0,4
0,2
0

G/H
200
100

b)

GRAD DER ZYLINDERPOLIERUNG

% 4
2
0

c)

DICKE DER ÖLKOHLE

MM 0,10
0,05
0

d)

0    100    200 0

110% LAST    WECHSELLAST    GEMISCHTES PROGRAMM 110% LAST
                            UND WECHSELLAST

b)

c)

FEUERSTEGOBERKANTE
ZYLINDERLAUFBÜCHSE
FEUERSTEGUNTERKANTE

d)

100    200    300    400

LAUFZEIT H